# EUROPEAN PATENT SPECIFICATION

(11) **EP 1 678 771 B1**
(45) Date of publication and mention of the grant of the patent: **08.09.2010**
(21) Application number: 04768914.6
(22) Date of filing: 18.10.2004
(51) Int. Cl.: H01M 6/10, H01M 10/04

(54) **POUCH BATTERY**
BEUTELBATTERIE
BATTERIE A POCHE

(30) Priority: 22.10.2003 GB 0324582
(43) Date of publication of application: 12.07.2006
(73) Proprietor: QinetiQ Limited, London, SW1E 6PD (GB)
(72) Inventor: GIWA, Cyril Olakunle, Gosport, Hampshire PO12 2AG (GB); EWEKA, Emmanuel Imasuen, Gosport, Hampshire PO12 2AG (GB); BOWLES, Peter George, Gosport, Hampshire PO12 2AG (GB); RITCHIE, Andrew Grahame, Farnborough, Hampshire GU14 0BE (GB)
(74) Representative: Humphreys, Elizabeth Jane
(86) International application number: PCT/GB2004/004384
(87) International publication number: WO 2005/045966

(56) References cited:
- US-A1- 2003 162 086
- US-B1- 6 190 426
- US-B1- 6 287 721

## Description

The present invention relates to pouch batteries and methods for their construction, and particularly to lithium primary batteries, such as, for example, lithium/carbon monofluoride batteries.

So-called 'pouch' batteries, which are also known as 'envelope' or 'packet' batteries, are increasingly replacing traditional hard-cased batteries in portable electrical applications. In a typical pouch battery, the battery components are overlaid to form a laminated cell structure, folded to a required size and then packaged in a heat-sealable foil. This packaging method offers a light-weight and flexible solution to battery design, and is capable of achieving high energy densities, with the final capacity of the cell being selected according to the desired application.

Pouch batteries can be based on a variety of different cell chemistries, and a range of electrolyte types can be utilised. Lithium primary and secondary batteries, for example, are commonly made according to a pouch design, and dry polymer, gel and liquid electrolytes have all been incorporated into pouch cells.

Despite benefits of weight, size and flexibility, manufacturers are constantly striving to improve the performance of pouch batteries to meet the increasing demands of the portable electronics industry. Moreover, pouch batteries do not offer optimum conditions for battery safety, particularly when attempts are made to scale them up.

US 6,190,426 to Dodds et al discloses a prismatic cell comprising an anode-separator-cathode subassembly wound on a mandrel, in which the anode is utilized as a "double-sided" anode with a cathode active layer in face-to-face relationship with each anode surface and with a separator interposed therebetween.

According to a first aspect of the present invention, there is provided a pouch battery comprising an electrode assembly, said assembly formed by respectively overlaying a sheet cathode, a sheet separator and a double-sided sheet anode to form a stacked structure, and subjecting the stacked structure to multiple folds, wherein the initial fold comprises folding the cathode in half around the double-sided anode so as to surround the respective upper and lower active anode surfaces thereof. The separator lies between the opposing active anode and cathode surfaces so as to prevent contact between the anode and cathode. The term "sheet" as used herein means "sheet-like", and the separator or electrodes may each be of a single or multiple layer construction, the latter preferably, but not necessarily, being bonded together to form a unitary sheet.

By employing a double-sided anode, significant improvements in energy density can be achieved, particularly where the anode comprises a single sheet current collector half the size of the cathode (as opposed to a current collector layer the same size as the other sheets, but folded in two); ideally the anode current collector's dimensions should correspond roughly to those of the cathode when folded in half perpendicular to its length. Moreover, by using a half sized anode that is active on both sides, the cathode capacity/cm² can be reduced, leading to a number of other advantages.

Usually, both the cathode and separator will be substantially the same size and shape, with the anode comprising a current collector layer that is half their size. (In some instances, the separator may be slightly larger than the cathode for safety reasons.) Usually, all three sheets will be of substantially the same width; (again, the separator may be slightly wider for safety reasons). The anode will then be laid over the upper half of the length of the other two superimposed sheets, with its bottom edge aligned with the mid-line of the other two sheets. Preferably, the aligned top edges of both anode and cathode electrode sheets have projecting contacts or tabs that act as electrode terminals.

Existing lithium batteries with a pouch cell construction normally use a spiral wound construction or a zig-zag folding method (resulting in fan folds) to reduce the size of the electrode assembly, the latter method being readily automated. However, in the present invention an alternative folding method is preferred.

During the initial fold the cathode is preferably folded midway along its length, so that the fold line extends perpendicular to the sheet length. Usually, the one or more subsequent folds is then made with the fold line extending perpendicular to the original length of the stacked structure, so that the overall length is halved at each fold and the folds are parallel to one another. (Such aligned half-folds are hereinafter generally referred to as "parallel folds".) It is desirable to make the one or more subsequent folds upon the same side of the stacked structure, so that the sheets continue to be rotated in the same direction. Advantageously, all the folds in the electrode assembly, including the initial fold, are parallel to one another.

The use of parallel folds is convenient in rapidly reducing cell size and appears to lead to improved cell performance, for example, the utilisation of cell materials appears to be better. This is believed to be due to the fact that most of the folds are less acute than in prior art folding arrangements. Other advantages of having all the folds parallel to one another include ease of electrolyte filling, and reduced resistance to subsequent folding.

To achieve different battery capacities, sheet electrodes with appropriately selected widths and lengths are employed to form the stacked structure and then at least two or three folds, up to maximum of about 5 or 6 folds, and preferably up to four folds, are made, as necessary, to reduce the electrode assembly to a convenient size and/or thickness. The present invention may be advantageously employed in larger scale pouch cells, that is, cells with nominal capacities exceeding 18Ah, 25Ah, 36Ah or even 50Ah, and also in smaller capacity pouch cells, that is, cells with nominal capacities below 18Ah, 5Ah, 1Ah or even lower. In larger scale cells, electrode sheet widths will usually exceed 5cm and lengths will exceed 1m.

The present invention relates, in particular, to primary lithium/solid cathode cells and, especially to lithium/carbon monofluoride primary cells. Thus, the active cathode material is preferably carbon monofluoride, also known as polycarbon monofluoride, or CFₓ. However, the invention is applicable to all possible cathode materials, such as, for example, manganese dioxide, iron disulphide, or cobalt oxide, and also to secondary, as well as primary, lithium batteries.

The cathode will normally comprise a sheet current collector and a cathode material layer, and usually the cathode will have an active surface on only one side thereof, over the entire face, formed by the cathode material layer. Ideally, the total cathode and anode capacities will be roughly matched to produce a balanced cell. (A difference in capacities of less than 15% is desirable.) If the cell is not balanced, any excess of either the anode or cathode material will not react and is dead weight. Furthermore, any unconsumed anode material remaining in the cell once the battery has been discharged may pose a safety hazard upon battery disposal, especially for larger scale pouch cells.

A double-sided anode is one which has two active surfaces, an upper active surface and a lower active surface, usually extending over the entire respective faces. The double-sided sheet anode will normally comprise a single sheet current collector and one or more anode material layers forming said upper and lower active surfaces. All the layers may be separate, but are preferably attached together or merged together or otherwise combined together to form a single integral anode. In a preferred arrangement for a lithium cell, the double-sided anode comprises a current collector in the form of a mesh or grid, usually of copper, with lithium foil occupying the openings thereof to form a double-sided lithium anode. Alternatively, the double-sided anode may be a single layer of lithium metal having upper and lower active surfaces.

The loading of the cathode material layer may be selected so that the cathode capacity/cm² is about half that of the anode capacity/cm². One advantage of having a reduced cathode capacity/cm² is that the coating thickness required for the active cathode material is less than it otherwise would be, which gives better coating adhesion, particularly in the case of carbon monofluoride. Furthermore, decreasing the cathode coating thickness leads to a beneficial increase in the power output for the battery.

In a further aspect, there is provided a method of manufacturing a pouch battery comprising the steps of:
overlaying a sheet cathode, a sheet separator and a double-sided sheet anode, respectively, to form a stacked structure;
folding the cathode in half around the double-sided anode so as to surround the respective upper and lower active surfaces thereof;
subjecting the folded sheets to one or more further folds to form an electrode assembly; and,
forming a pouch battery by sealing the electrode assembly in an envelope.

The electrode assembly may be placed in a pre-formed envelope that is subsequently sealed at the edge from which the contact tabs protrude, or the pouch may be formed in situ around the electrode assembly. Where the separator needs to include a liquid electrolyte, the method will include an electrolyte filling stage, prior to the final sealing of the pouch.

The anode is double-sided, that is to say, both of its surfaces act as effective electrode surfaces. The anode will usually include a current collector. In the case of a lithium anode, although the current collector may be sandwiched between two separate pieces of lithium foil each backed on to it, or between a single folded piece of lithium foil, advantageously the anode is an integral component comprising lithium foil integrated into a mesh, preferably a copper mesh. This arrangement offers equal amounts of lithium on each side of the anode, while preserving structural integrity and current flow, regardless of the extent of breakdown of the anode.

In one Example, a lithium/Cu laminate was formed by pressing 132 micron lithium foil onto 100 micron copper mesh, such that the lithium occupied the spaces within the mesh, to give a composite structure of capacity 27.2 mAh/cm² and depth 132 micron. This laminate was then cut to the required size for the anode.

The parallel folds described above provide benefits when employed in any pouch battery constructions, including prior art batteries having an anode of substantially the same size as the cathode. Thus, in a further aspect of the present invention, there is provided a pouch battery in which cathode, separator and anode sheets have been respectively overlaid on one another to form a stacked structure, and the structure has been successively folded in half so that its length is halved at each fold, each fold being made upon the same side of the structure with the fold lines extending perpendicular to the original length.

The invention will now be described in more detail, by way of example only, with reference to the accompanying drawings, in which:
Figures 1a and 1b are schematic elevational and plan views, respectively, of a typical prior art arrangement used to form an electrode assembly;
Figure 2 is a schematic, exploded view of a stacked structure used to form an electrode assembly according to the present invention;
Figures 3a and 3b are schematic elevational and plan views, respectively, of the stacked structure, prior to the initial fold;
Figures 4a and 4b are schematic elevational and plan views, respectively, of the stacked structure after the initial fold; and
Figure 5 schematically illustrates the stacked structure after a subsequent "parallel fold".

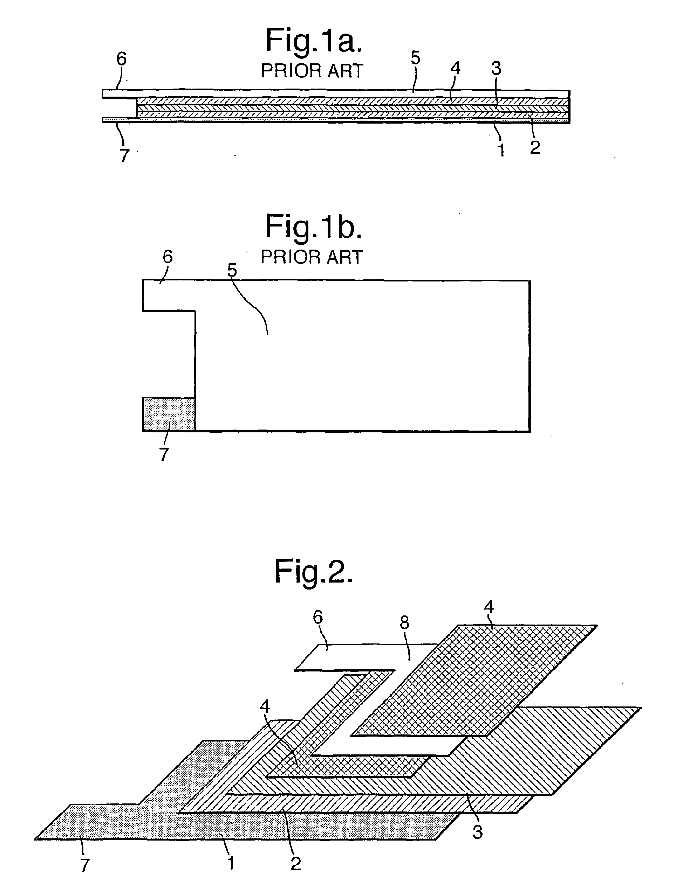

Elevational and plan views of a typical prior art arrangement used to form an electrode assembly are illustrated in Figures 1a and 1b respectively. The prior art assembly comprises a cathode collector layer (1), a cathode material layer (2), a separator (3), an anode material layer (4) and an anode collector layer (5), wherein each layer is substantially the same length and width. The collector layers (5) and (1) each comprise an additional tab of collector material (6) and (7) to act as respective anode and cathode terminals. The component layers are overlaid and together form a stacked structure that can be folded subsequently, if desired, to a smaller size. As indicated above, fan or zig-zag folds have commonly been used to reduce the size of prior art electrode assemblies prior to insertion into the packaging pouch.

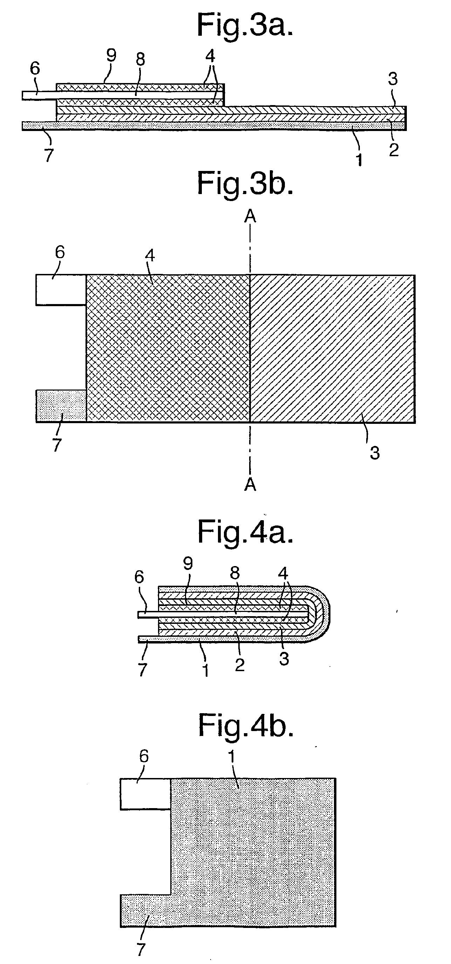

Figure 2 is an exploded view, illustrating the components of a stacked structure used according to the present invention to form an electrode assembly for a pouch battery. Figures 3a and 3b show elevational and plan views, respectively, of the structure, prior to the initial folding step. The cathode collector layer (1), cathode material layer (2) and separator (3) are laid up in the same manner as in the prior art arrangement. In contrast to the prior art structure, however, a double-sided anode (9) comprising anode material layers (4) and an anode collector layer (8) is positioned such that the bottom edge of the anode is aligned with a mid-line A-A of the cathode and separator layers. The double-sided anode (9) is substantially half the length of the cathode and separator layers.

Figures 4a and 4b show elevational and plan views, respectively, of the stacked structure after the initial fold.

The anode collector preferably comprises a metal mesh, grid or gauze, and is used to provide the external anodic, or negative, contact to the cell. Preferably the anode collector comprises a copper mesh. The cathode collector provides the external cathodic, or positive, contact to the cell and preferably comprises aluminium foil. Other suitable collector materials are well known in the art.

The anode material layers function as the anode of the battery and preferably comprise lithium. In one preferred assembly, the anode collector and lithium together form an integral anode, wherein lithium is present on both sides of the anode collector. Ideally, the integral anode is formed by pressing lithium foil onto a mesh, most suitably a copper mesh, such that the lithium occupies the openings of the mesh.

Safety is of particular concern in the case of larger capacity pouch cells, and hence, fragmentation of lithium metal as the anode is consumed should be minimised. (Prior art pouch cells containing liquid electrolyte have been known to present a fire hazard due to free lithium coming into contact with flammable organic solvent.) By using an integral anode in which the lithium is held on a solid substrate, in this case the anode collector, the liberation of fine particles of pyrophoric lithium into the cell can be substantially prevented.

The purpose of the separator is to separate the anode from the cathode, to carry the electrolyte and to act as a safety shut-down separator should the pouch cell overheat. For certain types of electrolyte, such as a dry polymer electrolyte or a polymer gel electrolyte, the electrolyte may itself function as the separator. For other types of electrolytes, in particular for a liquid electrolyte, the separator may comprise a semi-permeable or porous membrane which is soaked with the electrolyte.

Preferably, the separator comprises a liquid electrolyte and a semi-permeable membrane. More preferably, the semi-permeable membrane is a tri-layer polymer laminate, for example a polypropylene-polyethylene-polypropylene laminate.

Suitably, the liquid electrolyte comprises an organic carbonate, such as, for example, one or more of propylene carbonate, ethylene carbonate, dimethyl carbonate, diethyl carbonate and ethyl methyl carbonate, a borate, such as, for example, lithium bis-oxalato borate and lithium tetrafluoroborate, lithium hexafluorophosphate, lithium hexafluoroarsenate, lithium perchlorate, or any mixture thereof. Conveniently, the liquid electrolyte is dispersed in an organic solvent such as, for example, dimethoxyethane.

The electrode assembly requires one or more further folds, so as to form a compact assembly of the correct size for insertion into the packaging envelope. Any suitable folding method may be used, but preferably the one or more further folds are parallel folds. It is believed that parallel folds cause less damage to the various electrode and separator materials at the folds, thereby improving cell performance.

Another benefit of the parallel folding method is associated with the electrolyte filling stage. When liquid electrolyte is used, the electrolyte is preferably injected into a semi-permeable separator membrane after the precursor electrode assembly has been folded ready for insertion into the envelope packaging. More preferably, the liquid electrolyte is injected after the precursor electrode assembly has been inserted into the envelope packaging. In either case, the electrolyte needs to permeate the entire length of the separator membrane so as to yield an efficient cell. The inventors have found that parallel folds aid this process, leading to more rapid and more complete permeation than for a fan folded assembly. This may be due to less severe folds, but this is merely a theory.

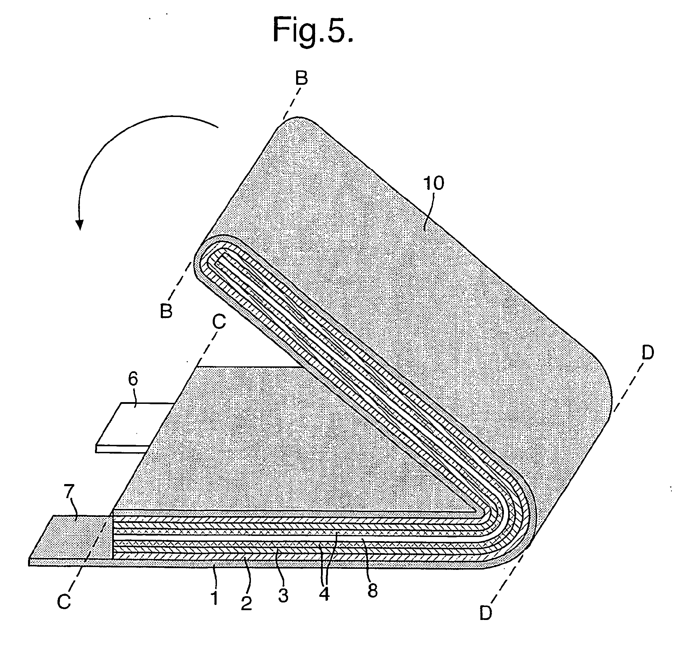

Figure 5 illustrates the parallel folding process. A parallel fold brings the lower edge of the stacked structure (10), indicated as edge B-B in Figure 5, up to, and parallel with, the upper edge of the stacked structure, indicated as edge C-C in Figure 5, in the direction indicated by the arrow. Contact tabs (6) and (7) are left exposed. The fold line, indicated as D-D in Figure 5, is therefore the mid-point of the unfolded stacked structure. For the next parallel fold, the fold edge D-D becomes the lower edge of the stacked structure, and so on. Successive parallel folds are preferably made on the same side of the stacked structure, (that is, folding continues in the direction of the arrow), which leads to less overall stress on its components.

Preferably, up to 5 or 6 folds are required in total. More preferably, up to 4 folds are required.

Typically, the packaging envelope comprises a foil layer, for example Surlyn®, which is folded to the required dimensions and heat sealed, either prior to insertion of the electrode assembly or *in situ* during construction of the electrode assembly. If an electrolyte-filling step is required, the edge bearing the contact tabs is sealed after said filling step.

For many cathode materials of choice, such as manganese dioxide and carbon monofluoride, the cathode material is coated onto the cathode collector as a slurry prior to assembling the precursor electrode assembly, thus forming an integral cathode. Preferably, the anode collector and lithium layer also form an integral electrode. By using at least one integral electrode, cell construction is simplified, and lay-up errors reduced. If both anode and cathode are integral electrodes, only three components need be laid down; the cathode, the separator and the half-length anode.

The following Example illustrates the invention:-

A 25 Ah primary lithium carbon monofluoride cell was manufactured in the following way:

A cathode sheet was prepared by, first, grinding and mixing intimately 42g carbon monofluoride and 3.2g of conductivity additive (carbon black). A binder solution was prepared by dissolving 4.8g of polyvinylidene fluoride (PVDF) in N-methyl pyrollidinone. Then a paste was formed from the CFₓ mixture and the PVDF solution.

Aluminium foil (1050 Alloy, 25-30 micron) was cleaned and the cathode paste was coated onto the Al foil to a depth of 570 micron, so as to give a cathode capacity of 12.6 to 13.6 mAh/cm². The sheet was then dried to give a final cathode composition by weight of 84:9.6:6.4 w/o CFₓ:PVDF:conductivity additive, and a final coating thickness of 185 micron.

The cathode sheet was cut to a length of 208cm and a width of 9cm, leaving an extra length for the terminal. The sheets were folded in half and vacuum dried, and, after drying, the cathode sheets were rolled and the cathode electrical terminals were prepared.

Next, the anode was prepared using a laminate formed from copper mesh and a single layer of lithium foil, the latter attached from one side of the mesh. The laminate was cut to a length of 104cm and a width of 9cm, leaving an extra length for the terminal, and then the laminate sheet was rolled. The thickness of the copper mesh was 100 micron and the lithium foil thickness was 132 micron, giving an anode capacity of 27.2 mAh/cm².

The anode electrical terminal was prepared by removing lithium from a defined area of the anode laminate with a suitable solvent. The lithium anode was then dried under vacuum to remove traces of solvent.

A safety separator (Celgard) was dried overnight under vacuum and then cut to a length of 209.5cm and a width of 10.5cm.

A Surlyn® sheet was cut and trimmed to the correct dimensions to form the cell packaging, and then heat sealed.

The cell was fabricated by first assembling the cathode-separator-anode layers. The cathode and separator layers were then folded around the anode, by means of a single parallel fold, to give a stacked structure of width 9cm and length 104cm. Then, three more parallel folds were applied to give a precursor electrode assembly of length 13cm and width 9cm, and the folded electrode assembly was inserted into the Surlyn® bag.

70.2g of lithium tetrafluoroborate was dissolved in a mixture of anhydrous propylene carbonate and anhydrous dimethoxyethane, to give a 1M solution of LiBF₄ electrolyte. The electrolyte was injected into the cell and then the cell was sealed.

Upon testing, the achieved capacity was 24.3 Ah, the cell utilisation was 95% and the energy density was 500 Wh/kg.

## Claims

1. A pouch battery comprising an electrode assembly, said assembly formed by respectively overlaying a sheet cathode, a sheet separator and a double-sided sheet anode to form a stacked structure, and subjecting the stacked structure to multiple folds, wherein the initial fold comprises folding the cathode in half around the double-sided anode so as to surround the respective upper and lower active anode surfaces thereof.

2. A pouch battery according to claim 1, wherein the anode comprises a single sheet current collector whose dimensions match those of the cathode when folded in half.

3. A pouch battery according to claim 2, wherein the cathode and separator are substantially the same size and shape.

4. A pouch battery according to any preceding claim, wherein during the initial fold the cathode is folded midway along its length, so that the fold line extends perpendicular to its length.

5. A pouch battery according to any preceding claim, wherein one or more subsequent folds is made with the fold line extending perpendicular to the original length of the stacked structure and its overall length is halved at each fold.

6. A pouch battery according to claim 5, wherein the one or more subsequent folds is made upon the same side of the stacked structure.

7. A pouch battery according to any preceding claim, wherein up to 5 or 6 folds are made in total.

8. A pouch battery according to any preceding claim, wherein the battery capacity exceeds 18Ah.

9. A pouch battery according to any preceding claim, wherein the cathode comprises a sheet current collector and a cathode material layer.

10. A pouch battery according to claim 9, wherein the cathode has an active surface on only one side thereof, formed by the cathode material layer.

11. A pouch battery according to any preceding claim, wherein the total cathode and anode capacities are roughly matched to produce a balanced cell.

12. A pouch battery according to any preceding claim, which comprises a primary lithium/solid cathode cell.

13. A pouch battery according to any preceding claim, wherein the cathode comprises carbon monofluoride.

14. A pouch battery according to any preceding claim, in which the double-sided anode comprises a single sheet current collector and one or more anode material layers forming said upper and lower active surfaces.

15. A pouch battery according to claim 14, wherein said layers have been attached together or merged together or otherwise combined together to form a single integral anode.

16. A pouch battery according to claim 15, in which the double-sided anode comprises a current collector in the form of a mesh or grid with lithium foil occupying the openings thereof to form a double-sided lithium anode.

17. A pouch battery according to any of claims 14 to 16, wherein there is only one anode material layer, which is effectively a single layer of lithium metal having upper and lower active surfaces.

18. A pouch battery according to any of claims 14 to 17, wherein the loading of the cathode material layer is selected so that the cathode capacity/cm² is about half that of the anode capacity/cm².

19. A method of manufacturing a pouch battery comprising the steps of:
overlaying a sheet cathode, a sheet separator and a double-sided sheet anode, respectively, to form a stacked structure;
folding the cathode in half around the double-sided anode so as to surround the respective upper and lower active surfaces thereof;
subjecting the folded sheets to one or more further folds to form an electrode assembly; and,
forming a pouch battery by sealing the electrode assembly in an envelope.

20. A method according to claim 19, further comprising an electrolyte filling stage.

21. A method according to claim 19 or claim 20, wherein the pouch battery is as specified in any one of claims 2 to 18.

22. A pouch battery according to any one of claims 1 to 18, wherein the sheet separator is folded in half around the double-sided anode.

## Patentansprüche

1. Pouch-Batterie, die eine Elektrodenanordnung umfasst, wobei die Anordnung durch das Übereinanderlegen einer Folienkathode, eines Folienseparators und einer doppelseitigen Folienanode gebildet, um eine Schichtstruktur zu bilden, und das mehrfache Falten der Schichtstruktur gebildet wird, wobei die erste Faltung das Falten der Kathode in Hälften so um die doppelseitige Anode umfasst, dass die obere aktive Anodenoberfläche und die untere aktive Anodenoberfläche davon umgeben werden.

2. Pouch-Batterie nach Anspruch 1, wobei die Anode einen einzigen Folienstromkollektor umfasst, dessen Abmessungen mit den Abmessungen der Kathode übereinstimmen, wenn sie in Hälften gefaltet ist.

3. Pouch-Batterie nach Anspruch 2, wobei die Kathode und der Separator im Wesentlichen die gleiche Größe und die gleiche Form haben.

4. Pouch-Batterie nach irgendeinem vorhergehenden Anspruch, wobei beim ersten Falten die Kathode in ihrer Mitte entlang ihrer Länge gefaltet wird, so dass sich die Faltlinie senkrecht zu ihrer Länge erstreckt.

5. Pouch-Batterie nach irgendeinem vorhergehenden Anspruch, wobei eine oder mehrere nachfolgende Faltungen mit einer Faltlinie, die sich senkrecht zu der ursprünglichen Länge der Schichtstruktur erstreckt, durchgeführt werden und wobei ihre Gesamtlänge bei jeder Faltung halbiert wird.

6. Pouch-Batterie nach Anspruch 5, wobei die eine folgende Faltung oder mehrere folgende Faltungen auf der gleichen Seite der Schichtstruktur durchgeführt werden.

7. Pouch-Batterie nach irgendeinem vorhergehenden Anspruch, wobei insgesamt bis zu 5 oder 6 Faltungen durchgeführt werden.

8. Pouch-Batterie nach irgendeinem vorhergehenden Anspruch, wobei die Batteriekapazität 18 Ah übersteigt.

9. Pouch-Batterie nach irgendeinem vorhergehenden Anspruch, wobei die Kathode einen Folienstromkollektor und eine Kathodenmaterialschicht umfasst.

10. Pouch-Batterie nach Anspruch 9, wobei die Kathode nur auf einer ihrer Seiten eine aktive Oberfläche aufweist, die aus der Kathodenmaterialschicht gebildet wird.

11. Pouch-Batterie nach irgendeinem vorhergehenden Anspruch, wobei die Gesamtkapazität der Kathode und die Gesamtkapazität der Anode grob übereinstimmen, um eine ausbalancierte Zelle zu erzeugen.

12. Pouch-Batterie nach irgendeinem vorhergehenden Anspruch, die eine Lithium/Festkathoden-Primärzelle umfasst.

13. Pouch-Batterie nach irgendeinem vorhergehenden Anspruch, wobei die Kathode Kohlenstoffmonofluorid umfasst.

14. Pouch-Batterie nach irgendeinem vorhergehenden Anspruch, in der die doppelseitige Anode einen Einfolienstromkollektor und eine oder mehrere Anodenmaterialschichten umfasst, die die obere aktive Oberfläche und die untere aktive Oberfläche erzeugen.

15. Pouch-Batterie nach Anspruch 14, wobei die Schichten aneinandergefügt worden sind oder zusammengeführt worden sind oder anders miteinander kombiniert worden sind, um eine einzige Anode aus einem Stück zu erzeugen.

16. Pouch-Batterie nach Anspruch 15, in der die doppelseitige Anode einen Stromkollektor in der Form eines Netzes oder Gitters mit einer Lithiumfolie umfasst, die die Öffnungen davon besetzt, um eine doppelseitige Lithiumanode zu bilden.

17. Pouch-Batterie nach einem der Ansprüche 14 bis 16, wobei es nur eine Anodenmaterialschicht gibt, die effektiv eine einzige Schicht aus Lithiummetall ist, die eine obere aktive Oberfläche und eine untere aktive Oberfläche aufweist.

18. Pouch-Batterie nach einem der Ansprüche 14 bis 17, wobei die Beschickung Kathodenmaterialschicht so ausgewählt wird, dass die Kathodenkapazität/cm² ungefähr halb so groß wie die Anodenkapazität/cm² ist.

19. Verfahren zur Herstellung einer Pouch-Batterie, das die folgenden Schritte umfasst:
Übereinanderlegen einer Folienkathode, eines Folienseparators und einer doppelseitigen Folienanode, um eine Schichtstruktur zu bilden;
Falten der Kathode in Hälften um die doppelseitige Anode, um so die obere aktive Oberfläche und die untere aktive Oberfläche davon zu umgeben;
einmaliges oder mehrfaches weiteres Falten der gefalteten Folien, um eine Elektrodenanordnung zu bilden; und
Erzeugen einer Pouch-Batterie, indem die Elektrodenanordnung in einer Hülle verschlossen wird.

20. Verfahren nach Anspruch 19, das weiterhin einen Schritt umfasst, in dem ein Elektrolyt eingefüllt wird.

21. Verfahren nach Anspruch 19 oder Anspruch 20, wobei die Pouch-Batterie so wie in einem der Ansprüche 2 bis 18 beschrieben ist.

22. Pouch-Batterie nach einem der Ansprüche 1 bis 18, wobei der Folienseparator in Hälften um die doppelseitige Anode gefaltet ist.

## Revendications

1. Batterie à poche comprenant un assemblage d'électrodes, ledit assemblage étant formé par la superposition respective d'une feuille de cathode, d'une feuille de séparateur et d'une feuille d'anode double face pour former une structure empilée, et par des pliages multiples de la structure empilée, dans laquelle le pliage initial consiste à plier la cathode en deux autour de l'anode double face de sorte qu'elle entoure les surfaces actives supérieure et inférieure respectives de celle-ci.

2. Batterie à poche selon la revendication 1, dans laquelle l'anode comprend une feuille simple collectrice de courant dont les dimensions correspondent à celles de la cathode pliée en deux.

3. Batterie à poche selon la revendication 2, dans laquelle la cathode et le séparateur ont une taille et une forme sensiblement identiques.

4. Batterie à poche selon l'une quelconque des revendications précédentes, dans laquelle pendant le pliage initial, la cathode est pliée à la moitié de sa longueur de sorte que la ligne de pliage s'étend perpendiculairement à sa longueur.

5. Batterie à poche selon l'une quelconque des revendications précédentes, dans laquelle un ou plusieurs plis successifs sont réalisés avec la ligne de pliage s'étendant perpendiculairement à la longueur initiale de la structure empilée et sa longueur totale est divisée par deux à chaque pliage.

6. Batterie à poche selon la revendication 5, dans laquelle lesdits un ou plusieurs plis successifs sont réalisés sur le même côté de la structure empilée.

7. Batterie à poche selon l'une quelconque des revendications précédentes, dans laquelle jusqu'à 5 ou 6 plis sont réalisés au total.

8. Batterie à poche selon l'une quelconque des revendications précédentes, dans laquelle la capacité de la batterie est supérieure à 18 Ah.

9. Batterie à poche selon l'une quelconque des revendications précédentes, dans laquelle la cathode comprend une feuille collectrice de courant et une couche de matériau de cathode.

10. Batterie à poche selon la revendication 9, dans laquelle la cathode comporte une surface active uniquement sur un côté de celle-ci, formée par la couche de matériau de cathode.

11. Batterie à poche selon l'une quelconque des revendications précédentes, dans laquelle les capacités totales de la cathode et de l'anode sont à peu près équivalentes pour produire une cellule équilibrée.

12. Batterie à poche selon l'une quelconque des revendications précédentes, qui comprend une cellule primaire lithium/cathode solide.

13. Batterie à poche selon l'une quelconque des revendications précédentes, dans laquelle la cathode comprend du monofluorure de carbone.

14. Batterie à poche selon l'une quelconque des revendications précédentes, dans laquelle l'anode double face comprend une feuille simple collectrice de courant et une ou plusieurs couches de matériau d'anode formant lesdites surfaces actives supérieure et inférieure.

15. Batterie à poche selon la revendication 14, dans laquelle lesdites couches ont été fixées entre elles ou fusionnées entre elles ou autrement associées les unes aux autres pour former une seule anode monobloc.

16. Batterie à poche selon la revendication 15, dans laquelle l'anode double face comprend un collecteur de courant sous forme de maillage ou de grille, une feuille de lithium occupant les ouvertures de celui-ci pour former une anode au lithium double face.

17. Batterie à poche selon l'une quelconque des revendications 14 à 16, dans laquelle il n'y a qu'une couche de matériau d'anode, qui constitue de manière efficace une seule couche de lithium métallique comportant des surfaces actives supérieure et inférieure.

18. Batterie à poche selon l'une quelconque des revendications 14 à 17, dans laquelle la charge de la couche de matériau de cathode est choisie de sorte que la capacité par cm² de la cathode soit à peu près la moitié de la capacité par cm² de l'anode.

19. Procédé de fabrication d'une batterie à poche, comprenant les étapes consistant à :
superposer respectivement une feuille de cathode, une feuille de séparateur et une feuille d'anode double face pour former une structure empilée ;
plier la cathode en deux autour de l'anode double face de sorte qu'elle entoure les surfaces actives supérieure et inférieure respectives de celle-ci ;
soumettre les feuilles pliées à un ou plusieurs autres pliages pour former un assemblage d'électrodes ; et
former une batterie à poche en enfermant hermétiquement l'assemblage d'électrodes dans une enveloppe.

20. Procédé selon la revendication 19, comprenant en outre une étape de remplissage d'électrolyte.

21. Procédé selon la revendication 19 ou la revendication 20, dans lequel la batterie à poche est telle que spécifiée dans l'une quelconque des revendications 2 à 18.

22. Batterie à poche selon l'une quelconque des revendications 1 à 18, dans laquelle la feuille de séparateur est pliée en deux autour de l'anode double face.
